# EUROPÄISCHE PATENTSCHRIFT

(11) **EP 0 699 726 B1**
(45) Veröffentlichungstag und Bekanntmachung des Hinweises auf die Patenterteilung: **21.04.1999**
(21) Anmeldenummer: 95112730.7
(22) Anmeldetag: 12.08.1995
(51) Int. Cl.: C09J 133/02

(54) **Wasserlösliche Haftklebemasse**
Water-soluble adhesive compound
Composition adhésive soluble dans l'eau

(30) Priorität: 01.09.1994 DE 4431053
(43) Veröffentlichungstag der Anmeldung: 06.03.1996
(73) Patentinhaber: Lohmann GmbH & Co. KG, 56567 Neuwied (DE)
(72) Erfinder: Czech, Zbigniew, Dr., D-56075 Koblenz (DE)
(74) Vertreter: Flaccus, Rolf-Dieter, Dr.

(56) Entgegenhaltungen:
- DE-A- 2 360 441
- PATENT ABSTRACTS OF JAPAN vol. 095, no. 001, 28.Februar 1995 & JP 06 299132 A (OTSUKA CHEM CO LTD), 25.Oktober 1994,

## Beschreibung

Die Erfindung betrifft eine in Wasser vollständig lösliche Haftklebemasse sowie ein Verfahren zu ihrer Herstellung und ihre Anwendung.

Lösemittelfreie Haftklebemassen, die aus der Schmelze mit hoher Beschichtungsgeschwindigkeit industriell verarbeitet werden können, sind bekannt. Haftklebemassen werden hauptsächlich für die Verarbeitung von Papierwaren, z.B. in Papier- oder Verpackungsindustrie, verwendet. Die Papierartikel sollen nach ihrer Verwendung gesammelt und regeneriert werden. Die bekannten, bisher verwendeten Haftklebemassen haben jedoch vom Standpunkt der Wirtschaftlichkeit beim Sammeln und Recyclen des verbrauchten Papiers schwerwiegende Nachteile, die auf die Wasserunlöslichkeit der eingesetzten Haftschmelzklebemassen und damit verbundene Recyclingschwierigkeiten und Probleme bei der Markteinführung des regenerierten Papiers zurückzuführen sind.

Bei der Papierherstellung, Veredelung und Bedruckung ist es erforderlich, die Papierrollen zu spleißen. Die Spleißvorgänge sollen schnell und leicht durchgeführt werden, wobei eine größtmögliche Festigkeit der Spleißstelle während der nachfolgenden Arbeitsvorgänge eine Voraussetzung für eine störungsfreie Produktion ist.
Dabei können die mechanischen und thermo-mechanischen Eigenschaften der Spleißstellen abhängig von den Produktionsparametern stark differieren. So werden beispielsweise für den fliegenden Rollenwechsel (flying splice) bei den schnell laufenden Bahnen beidseitig oder einseitig haftklebend ausgerüstete Bänder benötigt, deren Haftklebemassen eine sehr aggressive Klebrigkeit, ausreichende Scherbelastbarkeit und ausgezeichnete thermische Resistenz aufweisen.

Bei der Herstellung von doppelseitigen, einseitigen oder trägerlosen wasserlöslichen Haftklebebändern für die Verarbeitung in der Papierindustrie werden bisher lösemittelhaltige wasserlösliche Haftklebemassen eingesetzt. Zwar lassen sich lösemittelfreie, wasserlösliche Haftkleber mit Beschichtungsgeschwindigkeiten um ca. 200 m/min wesentlich schneller als die lösemittelhaltigen, wasserlöslichen Haftklebemassen zu wasserlöslichen Spleißbändern oder anderen Haftklebstoffartikeln verarbeiten, auf dem Markt gibt es jedoch keine wasserlöslichen, lösemittelfreien Haftklebemassen, die sich durch einen hohen Tack und eine aggressive Klebkraft zur Papieroberfläche, eine exzellente thermische Belastbarkeit bis zu 180 bis 220°C und eine vollständige Wasserlöslichkeit in einem breiten pH-Bereich auszeichnen. Besonders die thermische Resistenz, ausgedrückt durch eine hohe Kohäsion bei erhöhten Temperaturen, ist als eine Schwachstelle der bekannten lösemittelfreien, wasserlöslichen Systeme zu bezeichnen.

In der US-PS 3,597,264 sind anfeuchtbare wasserlösliche Schmelzklebemassen beschrieben, die ein partiell hydrolysiertes Polyvinylacetat als Hauptbestandteil enthalten. Die Anwendung derartiger Klebemassen für das Verkleben von diversen Papierartikeln scheitert an ihrer unzureichenden Klebrigkeit und Scherfestigkeit.
Die US-PS 3,444,125 beschreibt eine anfeuchtbare Schmelzklebemasse, bestehend im wesentlichen aus einem Vinylalkohol/Vinylester-Copolymer und einem Weichmacher. Die Zugabe von Weichmacher beeinflußt die Klebrigkeit des Copolymerisates positiv, beeinträchtigt aber gleichzeitig seine innere Festigkeit.
Aus DE-C 26 03 648 sind wasserlösliche Schmelzklebemassen bekannt, die einen partiell verseiften Polyvinylalkohol, gemischt mit einem Weichmacher, beispielsweise Polyethylenglykol, enthalten. Die Herstellung derartiger Klebemassen erfolgt im Extruder mit einer Entgasungszone. Der eingesetzte Weichmacher verleiht der wasserlöslichen Klebemasse die Klebrigkeit, verschlechtert aber ihre Kohäsion.
Die DE-A 37 38 786 beschreibt in wässrige alkalischen Lösungen auflösbare Klebefolien und Etiketten mit in wässrigen alkalischen Lösungen löslichem Kleber aus einem (Meth)acrylsäure/(Meth)acrylat-Copolymerisat. Die Herstellung erfolgt hier auch im Extruder mit eingebauter Entgasungszone.

Wie eigene Versuche mit der Herstellung von Haftklebemassen im Extruder belegen, ist ein solches Herstellverfahren nur bedingt geeignet, da die Polymerisation im Extruder sehr schwer beherrschbar ist. Oft sind die mittels Extruder hergestellten lösemittelfreien Haftklebstoffsysteme nicht gelpartikelfrei und weisen eine unakzeptable Menge an Restmonomeren und eine unzureichende Molmasse auf. Die Restmonomeren lassen sich in der Entgasungszone nicht vollständig entfernen.

Aufgabe der Erfindung ist es, ausgehend vom genannten Stand der Technik, eine wasserlösliche Haftklebemasse anzugeben, die zur Herstellung von wasserlöslichen Spleißbändern für den Einsatz in der Papierindustrie, zur Herstellung von wasserlöslichen selbstklebenden Etiketten, Verpackungsklebebändern oder anderen Haftklebstoffartikeln verwendet werden kann. Die wasserlösliche Haftklebemasse soll die bekannten Nachteile nicht mehr aufweisen.

Die Lösung der Aufgabe gelingt mit der Erfindung durch eine in Wasser lösliche Haftklebemasse, enthaltend ein wasserlösliches Copolymerisat und ein klebkraftregulierendes wasserlösliches Harz mit folgenden Komponenten:
(A) 100 Gew.-Teile eines wasserlöslichen Copolymerisates synthetisiert aus
   a) mindestens 65 Gew.-% einer Vinylcarbonsäure
   b) mindestens 5 bis 35 Gew.-% eines Alkyl(meth)acrylsäureesters mit 1 bis 12 C-Atomen im Alkylrest
   c) 0,05 bis 5,o Gew.-% eines polymerisationsfähigen Fotoinitiators
   und
(B) 30 bis 150 Gew.-Teile eines wasserlöslichen Weichmachers mit einer Molmasse bis 4000 Dalton.

Die erfindungsgemäß zusammengesetzte wasserlösliche Haftklebemasse zeichnet sich nach der Verarbeitung zur Haftklebstoffartikeln und anschließender UV-Vernetzung durch eine hervorragende Klebkraft auf diversen Papieren, eine ausgezeichnete Kohäsion, thermische Belastbarkeit und eine vollständige Wasserlöslichkeit in einem breiten pH-Bereich aus.

Bei den erfindungsgemäßen Haftklebemassen beträgt der Anteil an eincopolymerisierter Vinylcarbonsäure in wasserlöslichem Copolymerisat zwischen 65 bis 95 Gew.-%. Die Vinylcarbonsäure wird aus der Gruppe (Meth)acrylsäure, β-Acryloyloxypropionsäure, Vinylessigsäure, Dimethylacrylsäure, Trichloracrylsäure, Fumarsäure, Crotonsäure, Aconitsäure und Itaconsäure ausgewählt, wobei Acrylsäure und β-Acryloyloxypropionsäure bevorzugt sind.

Zur Herstellung des wasserlöslichen Copolymerisates werden aufgrund der niedrigen Glasübergangstemperatur klebrigmachende Alkyl(meth)acrylsäureester mit 1-12 C-Atomen im Alkylrest verwendet. Sie verleihen dem sonst spröden Copolymerisat eine gewisse Klebrigkeit. Bezüglich der geforderten Wasserlöslichkeit des synthetisierten Copolymerisates ist ihr Einsatz - sie selbst sind wasserunlöslich - bis zu 35 Gew.-% begrenzt. Eingesetzt werden Methyl-, Ethyl-, Propyl, Isopropyl-, Butyl-, Isobutyl-, Pentyl-, Hexyl-, Heptyl-, Octyl-, 2-Ethylhexyl-, Isooctyl-, 2-Methylheptyl-, Nonyl-, Isononyl-, Decyl- oder Dodecyl(meth)acrylat. Als besonders geeignet erwiesen sich Ethyl-, Butyl- und 2-Ethylhexylacrylat.

Um eine brauchbare Kohäsion und thermische Belastbarkeit der wasserlöslichen Haftklebemasse zu erreichen, muß das wasserlösliche Copolymerisat vernetzt werden. Konventionelle Vernetzungsmittel wie Metallchelate, Orthometallsäureester, Aziridin-, Triazin- oder Aminoharze eignen sich nur bedingt für auf Vinylcarbonsäure basierende Copolymerisate, da ein Nachvernetzungsprozeß in verstärktem Maße stattfindet und sich damit die Wasserlöslichkeit und Klebrigkeit erheblich verschlechtert.

Für wasserlösliche Haftklebemassen, die aus der Schmelze verarbeitet werden können, scheitert der Einsatz von konventionellen Vernetzungsmitteln an technischen Verarbeitungsproblemen und unerwünschtem frühzeitigem Gelieren.

Überraschenderweise ist die erfindungsgemäße Haftklebemasse durch den Einsatz von polymerisationsfähigen Fotoinitiatoren bei der Synthese des wasserlöslichen Copolymerisates und anschließender UV-Vernetzung außerordentlich gut als hochscherfeste und zugleich wasserlösliche Haftklebemasse geeignet. Nachdem eine gezielte Vernetzung mit den üblichen chemischen Methoden über Carboxylgruppen nicht zu erreichen ist, war es weiterhin überraschend, daß die mittels UV-Strahlen erzielte Vernetzung die Scherfestigkeit deutlich erhöht, die Wasserlöslichkeit aber nicht herabsetzt. Zudem zeigte sich, daß durch diese Art der Vernetzung die Tendenz zur Abgabe von Weichmachern an das verklebte Substrat so weit verringert wird, daß selbst beim Verkleben saugfähiger Papiere kein Durchbluten auftritt. Sogar dann nicht, wenn über längere Zeit höhere Temperaturen und Druck angewandt werden.

Als besonders effiziente polymerisationsfähige Fotoinitiatoren werden 4(2-Acryloylethoxy)phenyl(2-hydroxy-2-propyl)keton, Phenyl-(1-acryloyloxy)-cyclohexylketon, 1-Acryloyloxy-2-hydroxy-3-(4-oxybenzophenyl)-propan, α-Methylenoxyacryloylbenzoinmethylether, 4-Acryloyloxybenzophenon, N-Acryloylaminobenzophenon, 2-(N-Methylacrylamido)-4-methoxyacetophenon, 2-Acryloyloxy-4-methoxybenzophenon oder ein 4-Acryloyloxy-4'-chlorbenzophenon verwendet, wobei 4-Acryloyloxybenzophenon und Phenyl-(1-acryloyloxy)-cyclohexylketon bevorzugt werden.

Zwecks Verbesserung der Adhäsion zum Papier kann das wasserlösliche Copolymerisat ferner bis zu 25 Gew.-% einer ungesättigten organischen Säure enthalten, die neben einem Sauerstoffatom mindestens ein anderes weiteres Heteroatom in der Säuregruppe besitzt. Bevorzugt werden hierfür Vinylphosphonsäure, Vinylsulfonsäure, 2-Methylprop-l-en-3-sulfonsäure, Vinylbenzylsulfonsäure oder 2-Acrylamido-3-methylpropansulfonsäure eingesetzt.

Überraschenderweise wurde beobachtet, daß der Einbau von bis zu 15 Gew.-% hydroxylgruppenhaltiger (Meth)acrylsäureester in das wasserlösliche Copolymerisat seine thermische Belastbarkeit positiv beeinflußt.

Zweckmäßigerweise werden 2-Hydroxyethyl(meth)acrylat, 2-Hydroxypropyl(meth)acrylat, 4-Hydroxybutyl(meth)acrylat, Polyethylenglykol(meth)acrylat oder Polypropylenglykol(meth)acrylat eingesetzt. Die besten Ergebnisse wurden mit 2-Hydroxyethylacrylat und 2-Hydroxypropylmethacrylat erzielt.

Eine andere Möglichkeit, die thermische Resistenz des wasserlöslichen Copolymerisats anzuheben, ist das Eincopolymerisieren von bis zu 15 Gew.-% Acrylamid, Methacrylamid oder von N-substituierten (Meth)acrylamidderivaten. Als besonders geeignet haben sich für diesen Zweck N-substituierte Alkyl-, Aryl-, Arylalkyl-, Alkylaryl-, Alkoxyalkyl-, Alkoxyaryl-, Carboxyalkyl- und Acetylalkyl(meth)acrylamid erwiesen. Bevorzugt werden Acrylamid und N-Methyloylacrylamid eingesetzt.

Die nicht oder schwach klebrigen Copolymerisate werden durch Zusatz von Weichmachern und Klebrigmachern haftklebend eingestellt. Weichmacher und Klebrigmacher führen in völlig verschiedener Weise zu dem gleichen physikalischen Ergebnis. Ein Weichmacher verleiht Klebrigkeit durch Erweichen eines harten Polymerisates, d.h. durch wirksame Erniedrigung der Glasübergangstemperatur (Tg). Ein Klebrigmacher führt demgegenüber zu einer Erhöhung der Tg des Polymerisats.
Als Weichmacher können dazu verschiedene wasserlösliche Weichmacher mit einer Molmasse bis 4000 Dalton wie Polyethylenglykol, Polypropylenglykol, Polyoxypropylen/Polyoxyethylen-Copolymer, Monoethylenglykolmonomethylether, Monoethylenglykoldimethylether, Polyethylenglykolmonomethylether, Polyethylenglykoldimethylether oder verschiedene mehrwertige Alkohole wie beispielsweise Glycerin, Propan- oder Butandiole verwendet werden. Die Auswahl richtet sich im wesentlichen nach der Verträglichkeit mit dem jeweiligen Copolymer. In dieser Hinsicht haben sich Polyethylenglykol 300, Polypropylenglykol 400 und Polyethylenglykoldimethylether 500 am besten bewährt. Dabei werden zur Erzielung einer ausreichenden Haftklebrigkeit auf 100 Gew.-Teile Copolymerisat bevorzugt 50 bis 100 Gew.-Teile eines wasserlöslichen Weichmachers benötigt.

Um die Anfaßklebrigkeit (Tack) zu steigern, können außerdem klebkraftregulierende wasserlösliche Harze eingesetzt werden, die Hydroxyl- und/oder Carboxylgruppen enthalten und aus der Gruppe der Kolophonium-, Terpen-, Polyterpen-, Terpenphenol- und Polyterpenphenolharze ausgewählt sind. Sie werden in geringen Anteilen bis ca. 30 Gew.-%, bezogen auf das Copolymerisat, zugesetzt.

Die Herstellung der wasserlöslichen Copolymerisate erfolgt nach dem radikalischen Polymerisationsmechanismus in üblichen organischen Lösemitteln nach gängigen Polymerisationsverfahren. Bevorzugt werden Isopropanol oder Gemische aus Isopropanol und Aceton. Als Radikalbildner werden üblicherweise Azoverbindungen wie 2,2'-Azobis-(2,4 dimethylpentanitril), 2,2'-Azobis-(2-methyl-propanonitril), 2,2'-Azobis-(2-methyl-butanonitril) oder 1,1'-Azobis-(cyclohexancarbonitril) eingesetzt.

Nach der Zugabe von klebkraftregulierenden, wasserlöslichen Harzen und wasserlöslichen Weichmachern werden das Polymerisationsmedium und die Restmonomere destillativ entfernt. Dieser Prozeß wird in einem Polymerisationskessel oder in einem Dünnschichtverdampfer direkt nach der Polymerisation durchgeführt. Das zurückgewonnene Polymerisationsmedium wird zum Polymerisationsprozeß wieder eingesetzt.

Es entstehen hochviskose Produkte mit erheblicher Fließfähigkeit bei Raumtemperatur, die viskositätsmäßig bei Temperaturen von ca. 90 bis 150°C appliziert werden können. Sie sind geruchsarm und enthalten als flüchtige Bestandteile lediglich Spuren von Restmonomeren ( 0,5 Gew.-%) und bei der Polymerisation eingesetzte Lösemittel ( 0,3 Gew.-%).

Die lösemittelfreien, wasserlöslichen Haftklebemassen sind temperaturbeständig. Da sie keine Doppelbindungen enthalten, kann keine thermische Polymerisation oder oxidative Schädigung durch Luftsauerstoff eintreten. Die Beschichtungstemperaturen liegen wie bei üblichen Hotmelts, so daß beim Verarbeiten keine Freisetzung von thermischen Abbauprodukten zu befürchten ist.

Die kohäsiven Eigenschaften werden erst durch UV-Strahlen (UV-Lampe, Laser) erzeugt. Da keine olefinischen Doppelbindungen vorliegen, sprechen die Produkte nicht auf Elektronenstrahlung an. Die UV-Vernetzung wird durch Luftsauerstoff nicht merklich beeinträchtigt, so daß bei der Bestrahlung kein Inertgas benötigt wird.

Da für die UV-initiierte Vernetzung keine polymerisierbaren Doppelbindungen verwendet werden, bleiben im vernetzten Haftklebstoff keine unumgesetzten Doppelbindungen zurück, die eine Nachhärtung oder Verfärbung bei Licht- bzw. Sauerstoffeinwirkung verursachen könnten. Die Klebeeigenschaften bleiben nach erfolgter UV-Vernetzung stabil.

Die erfindungsgemäßen Haftklebemassen können beispielsweise durch eine Breitschlitzdüse auf ein dehäsiv eingestelltes Trägermaterial aufgestrichen werden. Auf diese Haftklebeschicht wird ein repulpierbares Vlies, Papier oder eine wasserlösliche Folie kaschiert. Anschließend wird auf das kaschierte Material eine zweite Haftklebeschicht aufgebracht.

Die vorliegende Erfindung wird in dem folgenden Beispiel näher erläutert.

### Beispiel 1:

In einem 11-Kolben, der mit einem mechanischen Rührer, Thermometer und einem Rückflußkühler ausgestattet ist, werden 200 g eines Lösemittelgemisches aus 120 g Isopropylalkohol und 80 g Aceton vorgelegt und zum Sieden gebracht. Zu dem siedenden Lösemittelgemisch wird innerhalb von 3 Stunden ein Gemisch aus 160 g Acrylsäure, 40 g n-Butylacrylat, 2 g 4(2-Acryloylethoxy)-phenyl-(2-hydroxy-2-propyl)-keton und 1,0 g AIBN zudosiert. Nach Zugabe der Monomeren - und Initiatorlösung wird das Reaktionsgemisch noch 1 Stunde nachpolymerisiert. Erhalten wird ein lösemittelhaltiges Polymerisat mit einer Molmasse von 400000 Dalton und einer Viskosität von 2,8 Pa.s. Unter ständigem Rühren werden zu dem lösemittelhaltigen Polymerisat 150 g Polyethylenglykol mit einer Molmasse von 400 Dalton und 40 g Fumarsäureharz mit einer Säurezahl von 253 zugegeben. Die flüchtigen Bestandteile (Lösemittel und Restmonomere) werden destillativ aus dem lösemittelhaltigen Polymerisat zuerst unter normalem Druck und ausschließlich unter Vakuum entfernt. Das von Lösemitteln und Restmonomeren befreite, mit wasserlöslichem Weichmacher und wasserlöslichem Harz gemischte Copolymerisat hat bei 120°C eine Schmelzviskosität von 13 Pa.s.

Die wasserlösliche Haftklebemasse wird aus der Schmelze bei 135 °C mit einer beheizbaren Rakel auf eine 30 pm starke siliconisierte Polyesterfolie mit einer Schichtdicke von ca. 60 g/m² aufgetragen und bis zu 60 s mit einer UV-Lampe UVRC 500 (Leistung: 500 W) bei einem Abstand UV-Lampe/bestrahltes Muster von ca. 5 cm UV-Strahlen ausgesetzt. Die UV-vernetzten Haftklebeschichten werden zu einem doppelseitigen, wasserlöslichen Haftklebeband mit einem Teefilterpapier als Träger verarbeitet.

Von dem hergestellten wasserlöslichen, doppelseitigen Haftklebeband werden die Klebkraft bei 20°C und thermische Scherfestigkeit auf Papier (Pappe), gestaffelt von 20 bis 200°C, und die Wasserlöslichkeit in verschiedenen pH-Bereichen getestet.
Die erhaltenen Prüfergebnisse werden tabellarisch zusammengefasst:

**Tabelle 1:**

| UV-Bestrahlungszeit [s] | Klebkraft [N/2,5 cm] (20 °C) | dynamische Scherfestigkeit [N/2,5 cm] bei ............ | | | | Wasserlöslichkeitsdaeur [s]* bei pH = | | |
|---|---|---|---|---|---|---|---|---|
| | | 20°C | 70°C | 150°C | 200°C | 3 | 7 | 11 |
| 0 | 20 KB | 300 KB | 180 KB | 110 KB | 90 KB | 30 | 25 | 20 |
| 5 | 18 twKB | 350 KB | 200 KB | 130 KB | 100 KB | 35 | 30 | 22 |
| 10 | 16 RS | 400 | 230 KB | 130 KB | 110 KB | 35 | 30 | 25 |
| 20 | 15 | 410 | 240 | 150 | 110 | 38 | 35 | 28 |
| 30 | 14 | 420 | 250 | 150 | 120 | 40 | 40 | 33 |
| 40 | 14 | 430 | 260 | 165 | 130 | 45 | 40 | 36 |
| 50 | 13,5 | 455 | 270 | 170 | 140 | 50 | 45 | 40 |
| 60 | 13.5 | 500 | 310 | 180 | 160 | 60 | 55 | 50 |

| | | | | | | | | |
|---|---|---|---|---|---|---|---|---|
| KB - Kohäsionsbruch, tw KB - teilweise Kohäsionsbruch, RS - Rückstand auf Prüfplatte * gemessen wird die Wasserlöslichkeitsdauer eines 5 cm x 2,5 cm großen doppelseitigen Spleißbandes in 200 ml Wasser (bei drei verschiedenen pH-Werten), gerührt mit einem mechanischen Rührer mit 400 U/min. Die Wasserlöslichkeit der UV-vernetzten Haftklebeschichten wird optisch beurteilt. | | | | | | | | |

Wie aus der Tabelle zur ersehen ist, zeichnen sich die aus erfindungsgemäßen Haftklebemassen hergestellten Haftklebstoffartikel nach der UV-Bestrahlung in Form von doppelseitigen, wasserlöslichen Spleißbändern durch eine hervorragende Klebkraft zu Papier (Pappe), exzellente thermische Belastbarkeit bis zu 200°C (gemessen als eine dynamische Scherfestigkeit) und eine schnelle (unter 60 s) und vollständige Wasserlöslichkeit in einem breiten pH-Bereich aus.

Ausführungsbeispiele der Erfindung werden im folgenden näher beschrieben:

Die nachfolgende Tabelle 2 enthält Polymerisationszusammensetzungen, in Tabelle 3 sind Zusammensetzungen für die erfindungsgemäßen Haftklebemassen zusammengestellt. Die Klebkraft, dynamische Scherfestigkeit und die Wasserlöslichkeitsdauer der mit erfindungsgemäßen Haftklebemassen hergestellten Haftklebebänder wird in Tabelle 4 dargestellt.

Die dabei verwendeten Abkürzungen haben folgende Bedeutung:

### Abkürzungsverzeichnis

- AS -: Acrylsäure
- APS -: β-Acryloyloxypropionsäure
- EA -: Ethylacrylat
- BA -: Butylacrylat
- 2-EHA -: 2-Ethylhexylacrylat
- ABP -: 4-Acryloyloxybenzophenon
- PAC -: Phenyl-(1-acryloyloxy)-cyclohexylketon
- VPS -: Vinylphosphonsäure
- VSS -: Vinylsulfonsäure
- HEA -: 2-Hydroxyethylacrylat
- HPMA -: 2-Hydroxypropylmethacrylat
- AAM -: Acrylamid
- N-MAAM -: N-Methylolacrylamid
- KPS 63 S-NPU -: wasserlöslicher Schellack
- FSH -: Fumarsäureharz mit einer Säurezahl von 253
- PEG 300 -: Polyethylenglykol 300
- PPG 400 -: Polypropylenglykol 400
- PEG-DME 500 -: Polyethylenglykoldimethylether 500

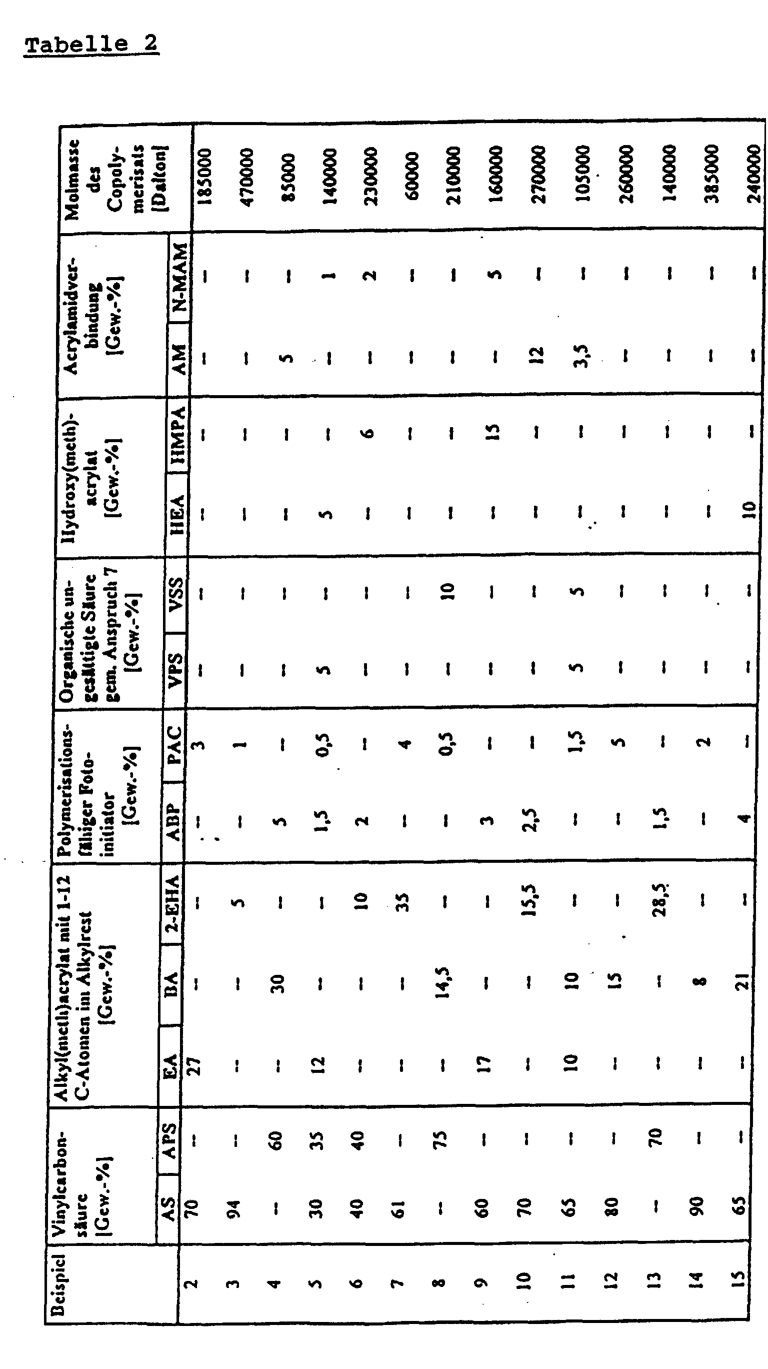

**Tabelle 3**

| Beispiel | Viskosität des Copolymerisates η₅₀ [Pa·s] | Klebkraftregulierendes wasserlösliches Harz [Gew.-%] | | Wasserlöslicher Weichmacher [Gew.-%] | | |
|---|---|---|---|---|---|---|
| | | FSH | KPS 63 | PEG 300 | PPG 400 | PEGDME 500 |
| 2 | 1,85 | 15 | -- | 70 | -- | -- |
| 3 | 3,80 | 30 | -- | -- | 150 | -- |
| 4 | 0,40 | -- | 5 | 30 | -- | -- |
| 5 | 1,60 | 10 | 5 | -- | -- | 60 |
| 6 | 2,60 | 20 | -- | 95 | -- | -- |
| 7 | 0,35 | 5 | -- | 15 | -- | 20 |
| 8 | 2,25 | 15 | -- | -- | 80 | -- |
| 9 | 1,50 | -- | 10 | -- | -- | 60 |
| 10 | 2,30 | -- | -- | -- | 120 | -- |
| 11 | 0,85 | 10 | -- | -- | 70 | -- |
| 12 | 2,90 | -- | 25 | -- | -- | -- |
| 13 | 1,20 | -- | 10 | 100 | -- | -- |
| 14 | 3,35 | 20 | 5 | -- | 60 | 60 |
| 15 | 2,60 | 15 | -- | 85 | -- | -- |

**Tabelle 4**

| Beispiel | Klebkraft [N/2,5 cm] (20 °C) | dynamische Scherfestigkeit [N/2,5 cm] bei ........... | | | | Wasserlöslichkeitsdauer [s] bei pH= | | |
|---|---|---|---|---|---|---|---|---|
| | | 20 °C | 70 °C | 150 °C | 200 °C | 3 | 7 | 11 |
| 2 | 14,5 | 450 | 260 | 180 | 135 | 60 | 45 | 30 |
| 3 | 16,0 | 570 | 330 | 245 | 160 | 30 | 21 | 13 |
| 4 | 17,5 | 320 | 210 | 180 | 110 | 60 | 50 | 41 |
| 5 | 18,0 | 460 | 275 | 170 | 120 | 55 | 48 | 36 |
| 6 | 19,0 | 480 | 280 | 175 | 140 | 49 | 40 | 28 |
| 7 | 17,0 | 300 | 200 | 130 | 70 | 58 | 50 | 40 |
| 8 | 18,5 | 370 | 230 | 190 | 130 | 52 | 46 | 31 |
| 9 | 20,0 | 340 | 210 | 165 | 120 | 58 | 49 | 33 |
| 10 | 16,5 | 450 | 275 | 200 | 160 | 56 | 50 | 40 |
| 11 | 16,0 | 375 | 235 | 185 | 125 | 59 | 52 | 42 |
| 12 | 19,5 | 435 | 260 | 190 | 115 | 38 | 31 | 24 |
| 13 | 20,0 | 375 | 240 | 175 | 110 | 44 | 36 | 30 |
| 14 | 21,0 | 490 | 265 | 180 | 120 | 33 | 24 | 17 |
| 15 | 18,5 | 510 | 270 | 195 | 130 | 46 | 37 | 31 |

## Patentansprüche

1. Wasserlösliche Haftklebemasse, enthaltend ein wasserlösliches Copolymerisat und ein klebkraftregulierendes wasserlösliches Harz, dadurch gekennzeichnet, daß sie
(A) 100 Gew.-Teile eines wasserlöslichen Copolymerisates synthetisiert aus
a) mindestens 65 Gew.-% einer Vinylcarbonsäure
b) mindestens 5 Gew.-% eines Alkyl(meth)acrylsäureesters mit 1-12 C-Atomen im Alkylrest
c) 0,05 bis 5,0 Gew.-% eines polymerisationsfähigen Fotoinitiators
und
(B) 30 bis 150 Gew.-Teile eines wasserlöslichen Weichmachers mit einer Molmasse bis 4000 Dalton
enthält.

2. Wasserlösliche Haftklebemasse nach Anspruch 1, dadurch gekennzeichnet, daß das wasserlösliche Copolymerisat eine Molmasse von 30.000 bis 500.000 Dalton aufweist.

3. Wasserlösliche Haftklebemasse nach den Ansprüchen 1 oder 2, dadurch gekennzeichnet, daß die Vinylcarbonsäure aus der aus (Meth)acrylsäure, β-Acryloyloxypropionsäure, Vinylessigsäure, Dimethylacrylsäure, Trichloracrylsäure, Fumarsäure, Crotonsäure, Aconitsäure und Itaconsäure bestehenden Gruppe ausgewählt ist.

4. Wasserlösliche Haftklebemasse nach Anspruch 1 oder 2, dadurch gekennzeichnet, daß der Alkyl(meth)acrylsäureester mit 1 bis 12 C-Atomen im Alkylrest aus der Gruppe der Methyl-, Ethyl-, Propyl-, Isopropyl-, Butyl-, Isobutyl-, Pentyl-, Hexyl-, Heptyl-, Octyl-, 2-Ethylhexyl-, Isooctyl-, 2-Methylheptyl-, Nonyl-, Isononyl-, Decyl- und Dodecyl(meth)acrylate ausgewählt ist.

5. Wasserlösliche Haftklebemasse nach Anspruch 1 oder 2, dadurch gekennzeichnet, daß der polymerisationsfähige Fotoinitiator ein 4(2-Acryloylethoxy)-phenyl(2-hydroxy-2-propyl)-keton, Phenyl-(l-acryloyloxy)-cyclohexylketon, 1-Acryloyloxy-2-hydroxy-3-(4-oxybenzophenyl)-propan, α-Methylenoxyacryloylbenzoinmethylether, 4-Acryloyloxybenzophenon, N-Acryloylaminobenzophenon, 2-(N-Methylacrylamido)-4-methoxyacetophenon, 2-Acryloyloxy-4-methoxybenzophenon oder ein 4-Acryloyloxy-4'-chlorbenzophenon ist.

6. Wasserlösliche Haftklebemasse nach Anspruch 1, dadurch gekennzeichnet, daß der wasserlösliche Weichmacher mit einer Molmasse bis 4000 Dalton ein Polyethylenglykol, Polypropylenglykol, Polyoxypropylen/Polyoxyethylen-Copolymer, Monoethylenglykolmonomethylether, Monoethylenglykoldimethylether, Polyethylenglykolmonomethylether, Polyethylenglykoldimethylether oder ein mehrfunktioneller Alkohol ist.

7. Wasserlösliche Haftklebemasse nach einem oder mehreren der Ansprüche 1 bis 6, dadurch gekennzeichnet, daß das wasserlösliche Copolymerisat ferner bis zu 25 Gew.-% einer ungesättigten organischen Säure, die neben einem Sauerstoffatom mindestens ein anderes weiteres Heteroatom in der Säuregruppe besitzt, enthält.

8. Wasserlösliche Haftklebemasse nach einem oder mehreren der Ansprüche 1 bis 7, dadurch gekennzeichnet, daß die ungesättigte organische Säure eine Vinylphosphonsäure, Vinylsulfonsäure, 2-Methylprop-1-en-3-sulfonsäure, Vinylbenzylsulfonsäure oder eine 2-Acrylamido-2-methylpropan-sulfonsäure ist.

9. Wasserlösliche Haftklebemasse nach einem oder mehreren der Ansprüche 1 bis 8, dadurch gekennzeichnet, daß das wasserlösliche Copolymerisat ferner bis zu 15 Gew.-% eines hydroxylgruppenhaltigen (Meth)acrylatsäureesters enthält.

10. Wasserlösliche Haftklebemasse nach Anspruch 9, dadurch gekennzeichnet, daß der hydroxylgruppenhaltige (Meth)acrylsäureester ein 2-Hydroxyethyl(meth)acrylat, 2-Hydroxypropyl(meth)acrylat, 4-Hydroxybutyl(meth)acrylat, Polyethylenglykol(meth)acrylat oder Polypropylengylkol(meth)acrylat ist.

11. Wasserlösliche Haftklebemasse nach einem oder mehreren der Ansprüche 1 bis 10, dadurch gekennzeichnet, daß das wasserlösliche Copolymerisat ferner bis zu 15 Gew.-% des (Meth)acrylamides oder eines N-substituierten (Meth)acrylamidderivates enthält.

12. Wasserlösliche Haftklebemasse nach Anspruch 11, dadurch gekennzeichnet, daß das N-substituierte (Meth)acrylamidderivat ein Alkyl-, Aryl-, Arylalkyl-, Alkylaryl-, Alkoxyalkyl-, Alkoxyaryl-, Carboxyalkyl- oder Acetylalkyl(meth)acrylamid ist.

13. Wasserlösliche Haftklebemasse nach Anspruch 1, dadurch gekennzeichnet, daß das klebkraftregulierende wasserlösliches Harz Hydroxyl- und/oder Carboxylgruppen enthält und aus der Gruppe der Kolophonium-, Terpen-, Polyterpen-, Terpenphenol- und Polyterpenphenolharze ausgewählt ist.

14. Verfahren zur Herstellung der wasserlöslichen Haftklebemasse nach einem oder mehreren der vorangehenden Ansprüche, dadurch gekennzeichnet, daß das wasserlösliche Copolymerisat durch radikalische Lösungspolymerisation synthetisiert wird und nach der Zugabe von klebkraftregulierendem wasserlöslichem Harz und wasserlöslichem Weichmacher das Lösemittel und die Restmonomere destillativ entfernt werden.

15. Verfahren nach Anspruch 14, dadurch gekennzeichnet, daß die Haftklebemasse aus der Schmelze verarbeitet wird.

16. Verfahren nach Anspruch 14, dadurch gekennzeichnet, daß die Haftklebemasse nach flächiger Verteilung auf einem Träger durch Einwirkung von Strahlen vernetzt wird.

17. Verwendung der wasserlöslichen Haftklebemassen nach den Ansprüchen 1 bis 16 zur Herstellung von wasserlöslichen Spleißbändern, Etiketten und Verpackungsklebebändern.

## Claims

1. Water-soluble pressure-sensitive adhesive mass containing a water-soluble copolymer and an adhesive strength-regulating water-soluble resin, characterized in that it contains
(A) 100%-wt. of a water-soluble copolymer synthesized from
a) at least 65%-wt. of a vinylcarboxylic acid
b) at least 5%-wt. of an alkyl (meth)acrylic ester having 1-12 C atoms in the alkyl residue
c) 0.05 to 5.0%-wt. of a polymerizable photoinitiator
and
(B) 30 to 150%-wt. of a water-soluble plasticizer having a molecular mass of up to 4000 dalton.

2. Water-soluble pressure-sensitive adhesive mass according to claim 1, characterized in that the water-soluble copolymer has a molecular mass of 30,000 to 500,000 dalton.

3. Water-soluble pressure-sensitive adhesive mass according to claim 1 or 2, characterized in that the vinylcarboxylic acid is selected from the group consisting of (meth)acrylic acid, β-acryloyloxipropionic acid, vinylacetic acid, dimethylacrylic acid, trichloroacrylic acid, fumaric acid, crotonic acid, aconitic acid and itaconic acid.

4. Water-soluble pressure-sensitive adhesive mass according to claim 1 or 2, characterized in that the alkyl (meth)acrylic ester having 1 to 12 C atoms in the alkyl residue is selected from the group of methyl, ethyl, propyl, isopropyl, butyl, isobutyl, pentyl, hexyl, heptyl, octyl, 2-ethylhexyl, isooctyl, 2-methylheptyl, nonyl, isononyl, decyl and dodecyl (meth)acrylates.

5. Water-soluble pressure-sensitive adhesive mass according to claim 1 or 2, characterized in that the polymerizable photoinitiator is a 4(2-acryloylethoxy)-phenyl(2-hydroxy-2-propyl) ketone, phenyl-(1-acryloyloxy)-cyclohexyl ketone, 1-acryloyloxy-2-hydroxy-3-(4-oxybenzophenyl)-propane, α-methyleneoxyacryloylbenzoine methyl ether, 4-acryloyl oxybenzophenon, N-acryloyl aminobenzophenon, 2-(N-methylacrylamido)-4-methoxyacetophenon, 2-acryloyloxy-4-methoxybenzophenon or a 4-acryloyloxy-4'-chlorobenzophenon.

6. Water-soluble pressure-sensitive adhesive mass according to claim 1, characterized in that the water-soluble plasticizer having a molecular mass of up to 4000 dalton is a polyethylene glycol, polypropylene glycol, polyoxypropylene-polyoxyethylene copolymer, monoethylene glycol monomethyl ether, monoethylene glycol dimethyl ether, polyethylene glycol monomethyl ether, polyethylene glycol dimethyl ether or a multifunctional alcohol.

7. Water-soluble pressure-sensitive adhesive mass according to one or more of claims 1 to 6, characterized in that the water-soluble copolymer further contains up to 25%-wt. of an unsaturated organic acid having, apart from an oxygen atom, at least one other, further heteroatom in the acid group.

8. Water-soluble pressure-sensitive adhesive mass according to one or more of claims 1 to 7, characterized in that the unsaturated organic acid is a vinylphosphonic acid, vinylsulfonic acid, 2-methylprop-1-ene-3-sulfonic acid, vinylbenzyl sulfonic acid, or a 2-acrylamido-2-methylpropane sulfonic acid.

9. Water-soluble pressure-sensitive adhesive mass according to one or more of claims 1 to 8, characterized in that the water-soluble copolymer further contains up to 15%-wt. of a hydroxyl groups-containing (meth)acrylic ester.

10. Water-soluble pressure-sensitive adhesive mass according to claim 9, characterized in that the hydroxyl groups-containing (meth)acrylic ester is a 2-hydroxyethyl (meth)acrylate, 2-hydroxypropyl (meth)acrylate, 4-hydroxybutyl (meth)acrylate, polyethylene glycol (meth)acrylate or polypropylene glycol (meth)acrylate.

11. Water-soluble pressure-sensitive adhesive mass according to one or more of claims 1 to 10, characterized in that the water-soluble copolymer further contains up to 15%-wt. of the (meth)acrylamide or of an N-substituted (meth)acrylamide derivative.

12. Water-soluble pressure-sensitive adhesive mass according to claim 11, characterized in that the N-substituted (meth)acrylamide derivative is an alkyl, aryl, arylalkyl, alkylaryl, alkoxyalkyl, alkoxyaryl, carboxyalkyl or acetylalkyl (meth)acrylamide.

13. Water-soluble pressure-sensitive adhesive mass according to claim 1, characterized in that the adhesive strength-regulating water-soluble resin contains hydroxyl and/or carboxyl groups and is selected from the group of the collophony, terpene, polyterpene, terpene phenol and polyterpene phenol resins.

14. Method for producing the water-soluble pressure-sensitive adhesive mass according to one or more of the preceding claims, characterized in that the water-soluble copolymer is synthesized through free-radical solution polymerisation and in that, following the addition of adhesive strengh-regulating water-soluble resin and water-soluble plasticizer, the solvent and the residual monomers are removed by distillation.

15. Method according to claim 14, characterized in that the pressure-sensitive adhesive mass is processed from the melt.

16. Method according to claim 14, characterized in that the pressure-sensitive adhesive mass is cross-linked through exposure to radiation after it has been distributed on a carrier in a flat shape.

17. Use of the water-soluble pressure-sensitive adhesive mass according to claims 1 to 16 for producing water-soluble splicing tapes, labels, and adhesive tapes for packaging.

## Revendications

1. Composition adhésive soluble dans l'eau, contenant un copolymère soluble dans l'eau et une résine régulant la force adhésive, soluble dans l'eau, caractérisée en ce qu'elle contient
(A) 100 parties en poids d'un copolymère soluble dans l'eau, synthétisé à partir
a) d'au moins 65 % en poids d'un acide vinylcarboxylique
b) d'au moins 5 % en poids d'un ester alkylique de l'acide (méth)acrylique comportant 1 à 12 atomes de carbone dans le résidu alkyle,
c) 0,05 à 5,0 % en poids d'un photoinitiateur polymérisable et
(B) 30 à 150 parties en poids d'un plastifiant soluble dans l'eau présentant une masse molaire jusqu'à 4000 Daltons.

2. Composition adhésive soluble dans l'eau selon la revendication 1, caractérisée en ce que le copolymère soluble dans l'eau présente une masse molaire de 30.000 à 500.000 Daltons.

3. Composition adhésive soluble dans l'eau selon les revendications 1 ou 2, caractérisée en ce que l'acide vinylcarboxylique est choisi dans le groupe constitué par l'acide (méth)acrylique, l'acide β-acryloyloxypropionique, l'acide vinylacétique, l'acide diméthylacrylique, l'acide trichloroacrylique, l'acide fumarique, l'acide crotonique, l'acide aconitique et l'acide itaconique.

4. Composition adhésive soluble dans l'eau selon la revendication 1 ou 2, caractérisée en ce que l'ester alkylique de l'acide (méth)acrylique comportant 1 à 12 atomes de carbone dans le résidu alkyle est choisi dans le groupe constitué par le méthacrylate de méthyle, d'éthyle, de propyle, d'isopropyle, de butyle, d'isobutyle, de pentyle, d'hexyle, d'heptyle, d'octyle, de 2-éthylhexyle, d'isooctyle, de 2-méthylheptyle, de nonyle, d'isononyle, de décyle et de dodécyle.

5. Composition adhésive soluble dans l'eau selon la revendication 1 ou 2, caractérisée en ce que le photoinitiateur polymérisable est une 4-(2-acryloyléthoxy)-phényl-(2-hydroxy-2-propyl)-cétone, une phényl-(1-acryloyloxy)-cyclohexylcétone, un 1-acryloyloxy-2-hydroxy-3-(4-oxybenzophényl)-propane, un α-méthylèneoxyacryloylbenzoïneméthyléther, une 4-acryloyloxybenzophénone, une N-acryloylaminobenzophénone, une 2-(N-méthylacrylamido)-4-méthoxyacétophénone, une 2-acryloyloxy-4-méthoxybenzophénone ou une 4-acryloyloxy-4'-chlorobenzophénone.

6. Composition adhésive soluble dans l'eau selon la revendication 1, caractérisée en ce que le plastifiant soluble dans l'eau, présentant une masse molaire allant jusqu'à 4000 Daltons, est un polyéthylèneglycol, un polypropylèneglycol, un copolymère de polyoxypropylène et de polyoxyéthylène, un monoéthylèneglycolmonométhyléther, un monoéthylèneglycoldiméthyléther, un polyéthylèneglycolmonométhyléther, un polyéthylèneglycoldiméthyléther ou un alcool à plusieurs fonctions.

7. Composition adhésive soluble dans l'eau selon une ou plusieurs des revendications 1 à 6, caractérisée en ce que le copolymère soluble dans l'eau contient en outre jusqu'à 25 % en poids d'un acide organique insaturé, qui comporte, en plus d'un atome d'oxygène, au moins un autre hétéroatome dans le groupe acide.

8. Composition adhésive soluble dans l'eau selon une ou plusieurs des revendications 1 à 7, caractérisée en ce que l'acide organique insaturé est un acide vinylphosphonique, un acide vinylsulfonique, un acide 2-méthyl-1-ène-3-sulfonique, un acide vinylbenzylsulfonique ou un acide 2-acrylamido-2-méthylpropane-sulfonique.

9. Composition adhésive soluble dans l'eau selon une ou plusieurs des revendications 1 à 8, caractérisée en ce que le copolymère soluble dans l'eau contient en outre jusqu'à 15 % en poids d'un ester de l'acide (méth)acrylique comportant un ou plusieurs groupes hydroxyle.

10. Composition adhésive soluble dans l'eau selon la revendication 9, caractérisée en ce que l'ester de l'acide (méth)acrylique comportant un ou plusieurs groupes hydroxyle est un (méth)acrylate de 2-hydroxyéthyle, un (méth)acrylate de 2-hydroxypropyle, un (méth)acrylate de 4-hydroxybutyle, un (méth)acrylate de polyéthylèneglycol ou un (méth)acrylate de polypropylèneglycol.

11. Composition adhésive soluble dans l'eau selon une ou plusieurs des revendications 1 à 10, caractérisée en ce que le copolymère soluble dans l'eau contient en outre jusqu'à 15 % en poids du (méth)acrylamide ou d'un dérivé N-substitué du (méth)acrylamide.

12. Composition adhésive soluble dans l'eau selon la revendication 11, caractérisée en ce que le dérivé N-substitué du (méth)acrylamide est un alkyl(méth)acrylamide, un aryl(méth)acrylamide, un arylalkyl(méth)acrylamide, un alkylaryl(méth)acrylamide, un alkoxy(méth)acrylamide, un alkyl(méth)acrylamide, un alkoxyaryl(méth)acrylamide, un carboxyalkyl(méth)acrylamide ou un acétylalkyl(méth)acrylamide.

13. Composition adhésive soluble dans l'eau selon la revendication 1, caractérisée en ce que la résine régulant la force adhésive, soluble dans l'eau comporte des groupes hydroxyle et/ou carboxyle et est choisi dans le groupe constitué par les résines colophaniques, terpéniques, polyterpéniques, terpènephénoliques et polyterpènephénoliques.

14. Procédé pour la fabrication de la composition adhésive soluble dans l'eau selon une ou plusieurs des revendications précédentes, caractérisé en ce que le copolymère soluble dans l'eau est synthétisé par polymérisation radicalaire en solution et en ce que le solvant et les monomères résiduels sont éliminés par distillation après addition de la résine régulant la force adhésive soluble dans l'eau et le plastifiant soluble dans l'eau.

15. Procédé selon la revendication 14, caractérisé en ce que la composition adhésive est transformée à partir du bain de fusion.

16. Procédé selon la revendication 14, caractérisé en ce que la composition adhésive est réticulée après répartition plane sur un support sous l'effet d'un rayonnement.

17. Utilisation des compositions adhésives solubles dans l'eau selon les revendications 1 à 16 pour la production d'épissures, d'étiquettes et de bandes adhésives pour emballages solubles dans l'eau.
